# EUROPEAN PATENT SPECIFICATION

(11) **EP 0 745 506 B1**
(45) Date of publication and mention of the grant of the patent: **26.04.2000**
(21) Application number: 96108444.9
(22) Date of filing: 28.05.1996
(51) Int. Cl.: B60N 2/06, B60N 2/36

(54) **Slidable rear seat for a motor vehicle**
Verschiebbarer Rücksitz für ein Kraftfahrzeug
Siège arrière coulissant pour un véhicule automobile

(30) Priority: 30.05.1995 IT TO950445
(43) Date of publication of application: 04.12.1996
(73) Proprietor: FIAT AUTO S.p.A., 10135 Torino (IT)
(72) Inventor: Aragno, Franco, 10093 Collegno (IT)
(74) Representative: Plebani, Rinaldo

(56) References cited:
- EP-A- 0 434 636
- WO-A-83/03081
- FR-A- 1 427 847
- FR-A- 1 499 448
- FR-A- 2 449 552
- FR-A- 2 691 681
- FR-A- 2 707 933
- FR-A- 2 707 934
- PATENT ABSTRACTS OF JAPAN vol. 095, no. 009, 31 October 1995 & JP 07 164942 A (MAZDA MOTOR CORP), 27 June 1995,

## Description

The present invention relates to an improved slidable rear seat, and particularly to a rear seat for a motor vehicle, comprising a seat cushion and a seat back both of which can be folded, together or singly, with a possibility of sliding forward and backward on fixed guides and provided with a cover and protection element to prevent the passengers or the seat back when folded from coming into contact with the guides which are normally coated in lubricant and dust. The said cover also performs a structural function in that its edge carries the attachments for the safety belts.

In known currently available motor vehicles both the seat cushion and the seat back of the rear seat are pivoted directly to the floor of the vehicle so that they can be folded; however, when the seat back is held in its upright position of use the space in the baggage compartment is rigidly defined and cannot be enlarged forwardly except by tilting the seat back completely.

Moreover, the seat back of known seats currently in use is normally engaged against fixed abutments of the vehicle structure with a predefined inclination with respect to the seat cushion without there being any possibility of modifying this inclination by the passengers to make the seat back more comfortable.

Even if slidable rear seats with tiltable seat backs and seat cushions are known (for example from EP-A-0434636 or FR-A-1427847), they generally present the disadvantage that the passengers and/or the folded seat back can accidentally contact the sliding members (guides or rollers), which are usually covered by lubricant, dirt and dust.

Therefore an object of the present invention is that of providing a rear seat for a motor vehicle, in which the above-mentioned disadvantages can be eliminated.

More particularly, an object of the invention is that of providing a rear seat which is slidable on fixed guides parallel to the direction of travel of the vehicle, in which accidental contact with the guides themselves is prevented.

Another object of the invention is that of providing a rear seat with a seat cushion and seat back both of which can be folded and which is displaceable forwardly with respect to the direction of travel of the vehicle in such a way that the availability of space for baggage in the rear part of the vehicle is considerably increased.

A further object of the invention is that of providing a rear seat for a motor vehicle, in which the positions of the seat and the seat back can be adjusted depending on the requirements of the passengers and/or to increase the space available in the baggage compartment.

Yet another object of the invention is that of providing an anti-slip seat, usually identified with the technical term "anti-submarining", having a seat modified in such a way as to prevent the body of a passenger from being able to slide forwardly on the cushion itself in the case of strong deceleration of the vehicle, even with the safety belt done up.

According to the present invention there is provided an improved slidable rear seat, particularly for a motor vehicle, as claimed in claim 1.

In particular, this panel is shaped with a projecting ridge in the front part on which the seat cushion rests and is adapted to prevent the passengers from sliding forward (anti-submarining).

Further characteristics and advantages of the present invention will become more clearly apparent from the following description of a preferred embodiment given by way of non-limitative example with reference to the attached drawings, in which:
Figure 1 is a perspective view of a longitudinally slidable folding rear seat according to the invention;
Figure 2 shows the seat of Figure 1 in side view; and
Figure 3 shows the seat of Figure 1 with the seat cushion and the seat back folded.

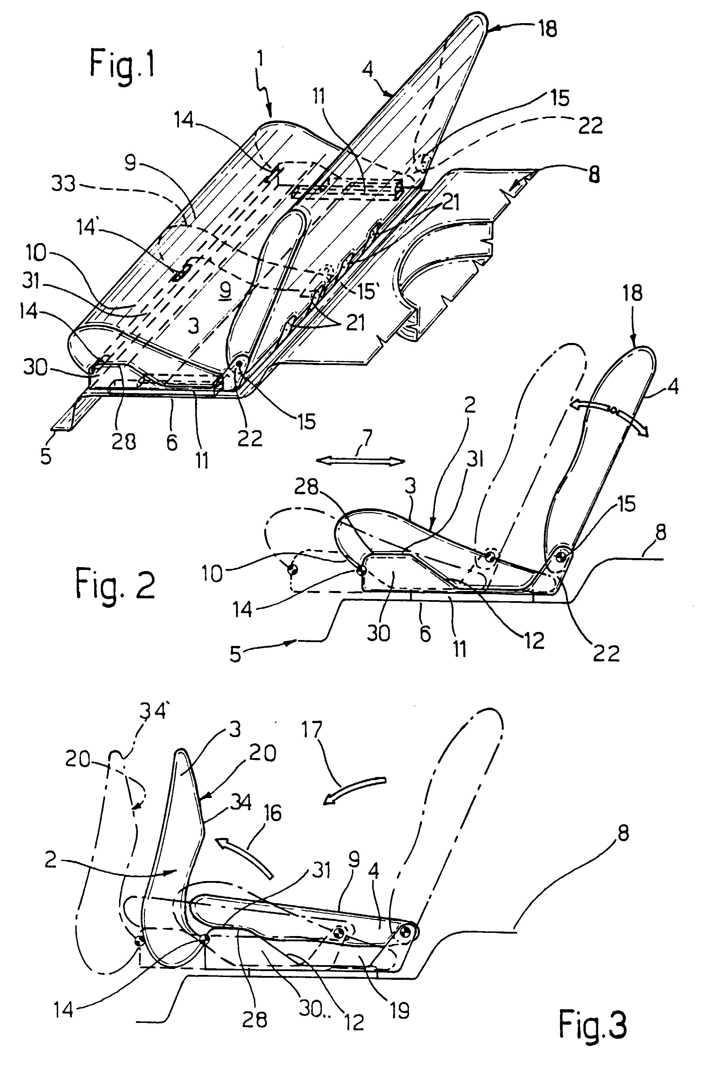

With reference to Figures 1, 2 and 3, a rear seat 1 for a motor vehicle, constituted essentially by a seat 2 and a seat back 4 is arranged on a platform 5 schematically represented with a flat surface 6 joined at the rear, with respect to the direction of travel 7, to another flat surface 8, shown partially sectioned, representing the floor of the motor vehicle's baggage compartment.

The seat 2 comprises a seat cushion 3 hereinafter for brevity simply called the cushion, constituted by a padded body covered in a covering fabric, which defines an upper seat contact surface 9 for the rear passengers; this seat surface 9 has an upwardly convex form and a slight downward curve in the direction of a front edge 10 of the cushion 3.

On the platform 5 of the vehicle are mounted rectilinear guides 11, generally two in number, arranged at the lateral edges of the seat 1 and orientated parallel to the direction of travel 7; the guides 11 are separated from one another transversely by an amount not greater than the length of the cushion 3; on the guides 11 a support structure for the seat 1 (Figure 2) can slide in both senses of the direction of travel of the vehicle, the support structure being constituted in the specific example by a self-supporting, substantially continuous pressed metal panel or platform 12 having a predetermined shape and sufficient rigidity to support both the seat cushion 3 and the seat back 4, which are mounted fixedly to it in a manner which allows them to be folded; in particular, the cushion 3 and the seat back 4 are joined to the panel 12 by means of respective hinge connections 14 and 15 to allow both the cushion 3 and the seat back 4 to be folded forward independently in the manner indicated with the arrows 16 and 17 respectively.

The panel 12 is therefore disposed between the guides 11 and the cushion 3, together with which it constitutes the seat 2, and is connected to the guides 11 by means of sliding members of known type not visible in the drawings; the panel 12 is disposed above the sliding members and guides 11 for total protection and covering of these; in particular it is dimensioned in such a way as to cover them completely in a longitudinal sense and in a transverse sense to prevent the passenger and/or the folded seat back from coming accidentally into contact with the guides 11 both from the side edges of the cushion 3 and through a space 19 left free by the cushion 3 when this is in the folded-forward position of Figure 3.

In particular, in order that the panel 12 should sufficiently cover the guides 11 it is necessary that its length in a transverse sense exceeds the distance between the guides 11, and that its width exceeds the length of the guides 11 by an amount at least equal to the length of movement of the panel on the guides themselves.

In fact, both the guides 11 and the sliding members associated with them, would normally be covered in lubricant, which over time will attract quantities of dust and dirt; therefore, according to an aspect of the present invention, with the introduction of the panel 12 it is intended to provide a slidable and adjustable rear seat which is at the same time also foldable, like a conventional fixed rear seat, without the risk for either the passengers or the seat back 4, of becoming soiled by contact with the guides 11 or the sliding members.

The seat back 4 is retained in its upright position of use 18 by a retaining member 22 constituted for example by a pivot (one for each side of the seat back 4) of known type carried fixedly by the panel 12. By acting on this member 22 it is possible to orientate the seat back 4 to vary its inclination with respect to the vertical both for the purpose of improving the "comfort" of the passengers and for the purpose of varying the capacity of the baggage space.

For the same reason, the panel 12, together with the cushion 3 and the seat back 4, can be made to translate longitudinally on the guides 11 forwardly or backwardly; the attachments for the safety belts, not visible in the drawings, are also fixed to the panel 12, for example in the positions indicated 21, between the seat back 4 and the cushion 3, in such a way that displacement of the seat 1 does not change the tension in the belt; by means of the displacement of the panel 12 the seat 1 can be locked in any position along its path, chosen according to the preference of the passenger, by known locking means not shown in the drawings, which locking means can be released either by the passenger acting on a manual handle or by an actuation device, also of known type, controlled by a central control unit.

By displacing the panel 12 fully forwardly the space available in the baggage compartment is further increased by a certain amount without having to fold the seat back right forward. In this way it is possible to carry loads of considerable volume in the baggage space without giving up carrying rear passengers, as long as these are of small stature (for example children), or else if they are prepared to sit in a seat position which is not entirely comfortable, in that it is displaced greatly towards the front position (an acceptable solution, for example, in the case of relatively short journeys).

In order considerably to increase the space available within the baggage compartment the cushion 3 and the seat back 4 can be folded with respect to the panel 12 from their use positions 3 and 18 respectively to folded positions in which the cushion 3 is disposed in a substantially vertical position 20, shown with a chain line in Figure 3, facing against the seat back of the front seats, not visible, after a rotation of about 90° in an anti-clockwise sense in the direction of the arrow 16; the seat back 4 in turn is disposed in a forwardly rotated position turned in the sense of the arrow 17, resting in a substantially horizontal position over the panel 12, occupying the space 19 left free by the cushion 3; it is clear that the presence of the panel 12 above the guides 11 prevents contact of the forwardly-folded seat back 4 against the guides themselves.

In this way the floor 8 of the baggage compartment is extended forwardly to the rear face 34 (Figure 3) of the forwardly-folded cushion 3, and can be further extended by displacing the panel 12 forwardly for the whole of its path, defined by the end stops 34' (Figure 3).

In accordance with a further feature of the present invention, the cushion 3 is associated as an integral part of the seat 3 with a transverse ridge 28 shaped as an anti-slip element or, in the technically current language, an "anti-submarining" element, for preventing a passenger seated upon the cushion from sliding forward on the seat under the safety belt (submarining) in the case of strong decelerations of the vehicle; the ridge 28 is constituted by a particular transverse conformation formed directly by dishing a front portion of the panel 12 positioned immediately under the front zone of the cushion 3 along the front edge thereof; the ridge 28 extends for the whole length of this latter and is delimited by two flat side walls 30 (Figures 2 and 3) facing the cushion 3 and by an upper surface 31 shaped in such a way as to interfere in use (Figure 2) with the lower front portion of the seat cushion 3 to produce a deformation in it which allows the ridge 28 to come immediately under the seat surface 9 of the cushion 3 causing an impediment to forward sliding movement of the body of a passenger seated on the seat 1, but without substantially altering the aesthetic aspect and/or comfort of the seat 1.

The cushion 3 and the element 28 are joined together by means of a pivotal connection member, which in the specific example can be constituted by the previously mentioned hinges 14 disposed with their axes of rotation aligned along the edge 10 of the cushion 3; as alternative arrangements the pivoted connection member can be formed by a single articulated element the length of which is equal to that of the cushion 3, disposed along the edge 10; in this latter embodiment the pivotal connection member 14 can be constituted by the same cladding fabric, suitably reinforced along the edge 10, to withstand folding numerous times when the cushion 3 is tipped forward.

To improve the usefulness of the rear baggage space both the seat cushion and the seat back can each be split into at least two independent parts, separated in Figure 1 by a broken line 33, each part of the cushion and/or of the seat back being foldable forward on its own account. In this case the two parts of the seat back are connected to the panel 12 with a further hinge 15', whilst the two parts of the cushion are connected to the ridge 28 by means of an additional hinge 14' disposed between the two lateral hinges 14 in correspondence with the division line 33.

## Claims

1. A slidable rear seat, particularly for a motor vehicle, comprising a seat back (4) and a seat cushion (3), both mounted so as to be tiltable on a support structure (12) slidable on fixed guides (11) parallel to the direction of travel of the said vehicle; characterised in that the said support structure (12) includes a substantially continuous supporting panel (12) of predetermined shape dimensioned in such a way as completely to cover the said guides (11), the said supporting panel (12) extending for a length in the transverse sense not less than the distance between the said guides (11) and extending for a width in the longitudinal sense not less than the length of the said guides (11): the said supporting panel (12) being disposed between the seat cushion (3) and the guides (11) for the protection and total covering of these latter, to prevent any accidental contact with the guides (11).

2. A slidable rear seat according to Claim 1, characterised in that the said panel (12) can slide on the said guides (11) for a predetermined path; said panel (12) having a width equal to at least the length of the said guides (11) plus the said path.

3. A slidable rear seat according to Claim 1 or Claim 2, characterised by the fact that the said cushion (3) and the said seat back (4) are inclined at a predetermined angle to one another and are connected to the said panel (12) by hinge means (14; 15) able to permit rotation of the said cushion (3) and the seat back (4) with respect to the said panel (12).

4. A slidable rear seat according to any preceding Claim, characterised in that the said cushion (3) is associated with an anti-slip element (28) formed fixedly on the said panel (12) and extending adjacent a front edge (10) of the said cushion (3) over the whole of its length.

5. A slidable rear seat according to Claim 4, characterised in that the said cushion (3) is connected to the said anti-slip element (28) with hinge means disposed along the said front edge (10).

## Patentansprüche

1. Gleitfähiger Rücksitz, insbesondere für ein Kraftfahrzeug, mit einer Rückenlehne (4) und einem Sitzkissen (3), die beide in der Weise montiert sind, daß sie auf einer Unterstützungsstruktur (12), die auf festen Führungen (11) parallel zur Bewegungsrichtung des Fahrzeugs gleiten kann, neigbar sind; dadurch gekennzeichnet, daß die Unterstützungsstruktur (12) eine im wesentlichen ununterbrochene Unterstützungsplatte (12) mit vorgegebener Form enthält, die so bemessen ist, daß sie die Führungen (11) vollständig bedeckt, wobei sich die Unterstützungsplatte (12) in Querrichtung über eine Länge erstreckt, die nicht kleiner als der Abstand zwischen den Führungen (11) ist, und sich in Längsrichtung über eine Breite erstreckt, die nicht kleiner als die Länge der Führungen (11) ist, wobei die Unterstützungsplatte (12) zwischen dem Sitzkissen (3) und den Führungen (11) angeordnet ist, um diese letzteren zu schützen und vollständig zu bedecken, um jeglichen zufälligen Kontakt mit den Führungen (11) zu vermeiden.

2. Gleitfähiger Rücksitz nach Anspruch 1, dadurch gekennzeichnet, daß die Platte (12) auf den Führungen (11) auf einem vorgegebenen Weg gleiten kann; wobei die Platte (12) eine Breite besitzt, die wenigstens gleich der Länge der Führungen (11) zuzüglich dieses Weges ist.

3. Gleitfähiger Rücksitz nach Anspruch 1 oder Anspruch 2, dadurch gekennzeichnet, daß das Kissen (3) und die Rückenlehne (4) unter einem vorgegebenen Winkel zueinander geneigt sind und mit der Platte (12) durch eine Scharniereinrichtung (14; 15) verbunden sind, welche eine Drehung des Kissens (3) und der Rückenlehne (4) in bezug auf die Platte (12) ermöglichen kann.

4. Gleitfähiger Rücksitz nach irgendeinem vorangehenden Anspruch, dadurch gekennzeichnet, daß dem Kissen (3) ein Rutschverhinderungselement (28) zugeordnet ist, das an der Platte (12) fest ausgebildet ist und sich in der Nähe der Vorderkante (10) des Kissens (3) über dessen gesamte Länge erstreckt.

5. Gleitfähiger Rücksitz nach Anspruch 4, dadurch gekennzeichnet, daß das Kissen (3) mit dem Rutschverhinderungselement (28) verbunden ist, wobei die Scharniereinrichtung längs der Vorderkante (10) angeordnet ist.

## Revendications

1. Siège arrière coulissant, en particulier pour un véhicule automobile, comprenant un dossier de siège (4) et un coussin de siège (3), tous deux montés, de façon à pouvoir être basculés, sur une structure de support (12) apte à coulisser sur des guides fixes (11), parallèlement à la direction de circulation dudit véhicule, caractérisé en ce que ladite structure de support (12) comporte un panneau de support (12) sensiblement continu de forme prédéterminée, dimensionné d'une manière telle qu'il recouvre complètement lesdits guides (11), ledit panneau de support (12) s'étendant, dans le sens transversal, sur une longueur qui n'est pas inférieure à la distance entre lesdits guides (11) et s'étendant, dans le sens longitudinal, sur une largeur qui n'est pas inférieure à la longueur desdits guides (11), ledit panneau de support (12) étant placé entre le coussin de siège (3) et les guides (11) pour assurer la protection et le recouvrement total de ces derniers, afin d'empêcher tout contact accidentel avec les guides (11).

2. Siège arrière coulissant selon la revendication 1, caractérisé en ce que ledit panneau (12) peut coulisser sur lesdits guides (11) sur une course prédéterminée, ledit panneau (12) ayant une largeur égale à au moins la longueur desdits guides (11) augmentée de ladite course.

3. Siège arrière coulissant selon la revendication 1 ou la revendication 2, caractérisé par le fait que ledit coussin (3) et ledit dossier de siège (4) sont inclinés, suivant un angle prédéterminé, l'un par rapport à l'autre et sont reliés audit panneau (12) par des moyens d'articulation (14 ; 15) aptes à autoriser un pivotement dudit coussin (3) et du dossier de siège (4) par rapport audit panneau (12).

4. Siège arrière coulissant selon l'une quelconque des revendications précédentes, caractérisé en ce que ledit coussin (3) est associé à un élément anti-glissement (28) formé à demeure sur ledit panneau (12) et s'étendant au voisinage immédiat d'un bord avant (10) dudit coussin (3), sur la totalité de sa longueur.

5. Siège arrière coulissant selon la revendication 4, caractérisé en ce que ledit coussin (3) est relié audit élément anti-glissement (28) à l'aide de moyens d'articulation placés le long dudit bord avant (10).
